# EUROPEAN PATENT SPECIFICATION

(11) **EP 3 050 731 B1**
(45) Date of publication and mention of the grant of the patent: **11.07.2018**
(21) Application number: 16153843.4
(22) Date of filing: 02.02.2016
(51) Int. Cl.: B60J 10/84, B62D 25/04

(54) **WEATHER-STRIP-EQUIPPED VEHICLE BODY STRUCTURE**
MIT DICHTUNGSSTREIFEN AUSGERÜSTETER FAHRZEUGAUFBAU
STRUCTURE DE CARROSSERIE DE VÉHICULE ÉQUIPÉE D'UNE BANDE DE PROTECTION CONTRE LES INTEMPÉRIES

(30) Priority: 02.02.2015 JP 2015018299
(43) Date of publication of application: 03.08.2016
(73) Proprietor: HONDA MOTOR CO., LTD., Tokyo, 107-8556 (JP); Nishikawa Rubber Co., Ltd., Hiroshima-shi, Hiroshima-ken (JP)
(72) Inventor: SUESADA, Ryo, Wako-shi, Saitama 351-0193 (JP); SODA, Masaki, Wako-shi, Saitama 351-0193 (JP); MATSUURA, Toshifumi, Hiroshima-shi, Hiroshima (JP); NAKANISHI, Shinji, Hiroshima-shi, Hiroshima (JP)
(74) Representative: Herzog, Markus

(56) References cited:
- DE-A1-102006 060 391
- JP-A- H08 127 237
- JP-A- 2005 205 964
- JP-U- H02 148 825

## Description

The present invention relates to an improvement in a vehicle body structure equipped with a weather strip for sealing between a door opening and a door of a vehicle body as the door opening is closed by the door.

Among weather-strip-equipped vehicle body structures, there is one which is comprised of a weather strip disposed at a door opening and having a bottom part stuck to a bonding surface of the door opening by means of a double-side adhesive tape. An extension part rises from bottom of the weather strip along an inner surface of a flange of the door opening while a lip part extends from a distal end of the extension part along an outer surface of the flange. The bottom part of the weather strip, the extension part and the lip part are integrally formed of a solid or hard rubber. Upon attachment of the weather strip to the door opening, a flange is fitted between the lip part and the extension part (see, e.g., JP 2964862 B).

Since, in the weather-strip-equipped vehicle body structure disclosed in JP 2964862 B, the bottom part of the weather strip, the extension part and the flange are formed integrally from a solid rubber, the weather strip can be positioned appropriately relative to the flange by restricting the extension part with the flange. However, upon attachment of the weather strip to the door opening, the flange is placed in fitted engagement between the lip part and the extension part. Thus, it is necessary to leave a gap between the flange and the lip part so as to maintain easy assemblage of the weather strip. This renders tedious and time consuming an operation to move the bottom part of the weather strip in a vehicle-width direction along the boding surface of the door opening and to adhere the bottom part of the weather strip to an attachment position,

One may propose attaching the weather strip to the attachment position by bonding the bottom part of the weather strip to the bonding surface of the door opening while pressing the extension part against the flange. However, on account of a design feature of an associated vehicle and formability of the door opening, it is likely that the flange will be placed at an obtuse angle relative to the bonding surface. In this instance, pressing of the extension part against the flange will results in the weather strip bottom part coming off from the boding surface of the weather strip and in moving in the vehicle-width direction relative to the bonding surface. This renders an operation to position the weather strip in the vehicle-width direction tedious and time consuming.

In JP H02 148825 U, on which the preamble of claim 1 is based, the projecting surface of the outer panel which is substantially perpendicular to the adhering surface is in parallel to the window glass pane. The same applies to JP H08 127237 A.

It is therefore an object of the present invention to provide a weather-strip-equipped vehicle body structure which allows attachment of a weather strip without requiring extra work and allows positioning of the weather strip without being affected in any way by a flange configuration.

According to an aspect of the present invention, there is provided a weather-strip-equipped vehicle body structure in accordance with claim 1.

By thus providing the projecting surface between the adhesion surface and the flange and causing it to project at a substantially right angle relative to the adhesion surface, it becomes possible, for adhering the weather strip to the adhesion surface, to position the weather strip at an adhering position by pressing the weather strip against the projecting surface. This makes it possible to attach the weather strip to the adhering or mounting position on the adhesion surface without requiring a tedious and time-consuming operation.

Provision of the projecting surface between the adhesion surface and the flange also makes it possible to provide the projecting surface separately from the flange. Thus, the weather strip can be positioned at a desired location without being adversely affected by the configuration of the flange. As a result, the weather strip can be positioned at the mounting position with the projecting surface even when the flange is positioned at an obtuse angle relative to the adhesion surface so as to satisfy associated vehicle design requirements and formability of the door opening.

Ordinarily, the weather strip is attached to a metallic retainer provided as a separate or independent member to the door opening. In contrast, in the inventive arrangement described above, the weather strip is pressed against the adhesion surface and stuck thereto, thereby mounting the weather strip to the mounting position of the door opening. As a result, the retainer ordinarily used in a weather strip attaching operation can be omitted, thus enabling desired weight and cost reduction.

It is preferred that the weather-strip-equipped vehicle body structure further comprise a corner part which is provided between the adhesion surface and the flange and where the adhesion surface and the flange intersect, such that the adhesion surface and the flange extend continuously, that the outer panel include a bulging part disposed to astride the adhesion surface and the flange and bulging farther toward the vehicle exterior than the corner part, and that the projecting surface be provided to the bulging part.

Preferably, the bulging part is provided with a connecting surface for connecting the projecting surface to the flange. The connecting surface may be disposed substantially perpendicularly to the projecting surface.

In a preferred form, the flange has a weld point at which the flange is connected by spot welding to the inner panel. The connecting surface may have, in the vicinity of the weld point, a recessed part depressed toward the adhesion surface.

Desirably, the door opening member includes a second outer panel which is positioned between the outer panel and the inner panel and has a second flange laid on the flange of the outer panel in a vehicle-width direction. The flange and the second flange may be laid one over the other at an outer panel part where the bulging part is not provided.

The door opening member may comprise: a cabin body connected to a fender panel positioned on a side facing the vehicle exterior; and a pillar part projecting downward from the cabin body. The outer panel may be included in the pillar part.

Certain preferred embodiments of the present invention will be described in detail below with reference to the accompanying drawings in which:
Fig. 1 is a side view illustrating a weather-strip-equipped vehicle body structure according to the present invention;
Fig. 2 is a side view illustrating a vehicle body side part of Fig. 1, with a sashless door disassembled from the same;
Fig. 3 is a side view illustrating a door opening of Fig. 1, with front and rear weather strips disassembled from the same;
Fig. 4 is a perspective view illustrating the rear weather strip of Fig. 2;
Fig. 5 is a partial enlarged view of part 5 of Fig. 3;
Fig. 6 is an exploded side view illustrating a rear pillar part of Fig. 5;
Fig. 7 is a cross-sectional view taken along line 7 - 7 of Fig. 1;
Fig. 8 is a cross-sectional view taken along line 8 - 8 of Fig. 1;
Fig. 9 is a cross-sectional view illustrating an upper outer panel of Fig. 8, with the rear weather strip disassembled from the same;
Fig. 10 is an enlarged view of part 10 of Fig. 5;
Fig. 11 is an enlarged view part 11 of Fig. 9;
Fig. 12 is a cross-sectional view taken along line 12 - 12 of Fig. 10;
Fig. 13 is a view illustrating an example mode of joining a flange of the upper outer panel and a flange of an upper half of the inner panel together by spot welding;
Fig. 14 is a view illustrating an example mode of bearing a pressing force acting on a projecting surface;
Figs. 15A and 15B illustrate an example mode of inhibiting displacement of a rear weather strip by a window glass pane of the sashless door upon elevation of the window glass pane; and
Fig. 16 is a view illustrating an example mode of inhibiting displacement of the rear weather strip by the window glass pane upon closure of the sashless door.

The terms "front", "rear", "left" and "right" used throughout the specification represent directions as seen from a vehicle driver.

Detailed discussion will now be made as to a weather-strip-equipped vehicle body structure 10 according to an embodiment of the present invention. Hereinafter, the weather-strip-equipped vehicle body structure 10 will be referred to as "the vehicle body structure 10".

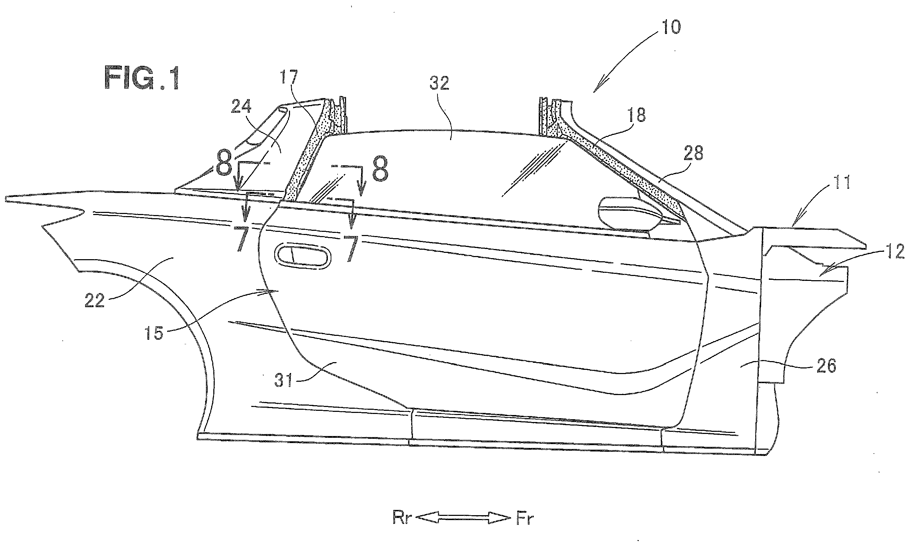

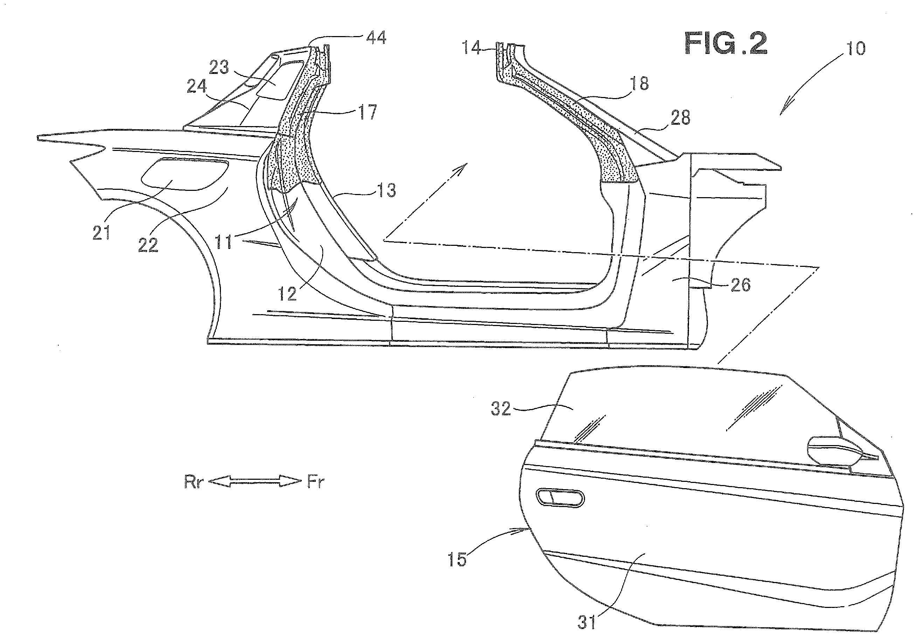

As shown in Figs. 1 and 2, the vehicle body structure 10 is comprised of a door opening member 12 disposed on a side of a vehicle body side part (vehicle body) 11, a sashless door 15 for opening and closing a door opening 13 of the door opening member 12, a rear weather strip 17 provided to the door opening 13 on a vehicle body rear side, and a front weather strip provided to the door opening on a vehicle body front side.

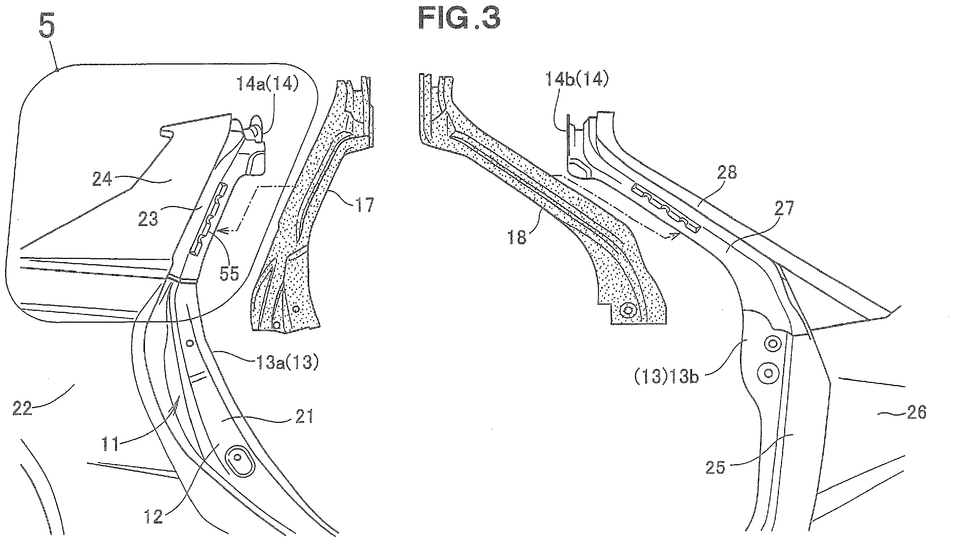

The vehicle body structure 10 also includes a rear fender panel 22 provided to a rear cabin body 21 of the door opening member 12, a rear external member 24 provided to a rear pillar part 23 of the door opening member 12, a front fender panel 26 provided to a front cabin body 25 (see Fig. 3) of the door opening member 12, and a front external member 28 provided to a front pillar part 27 (see Fig. 3) of the door opening member 12.

The sashless door 15 includes a door body 31 provided at a front peripheral edge part of the door opening 13openably and closably via door hinges (not shown) and a window glass pane 32 vertically movably supported on the door body 31.

With the sashless door 15 closed, the rear weather strip 17 and the front weather strip 18 seal between the sashless door 15 and the door opening 13. Herein, the sashless door 15 is meant to be a door that does not have a window frame for supporting the window glass pane 32 upwardly of the door body 31.

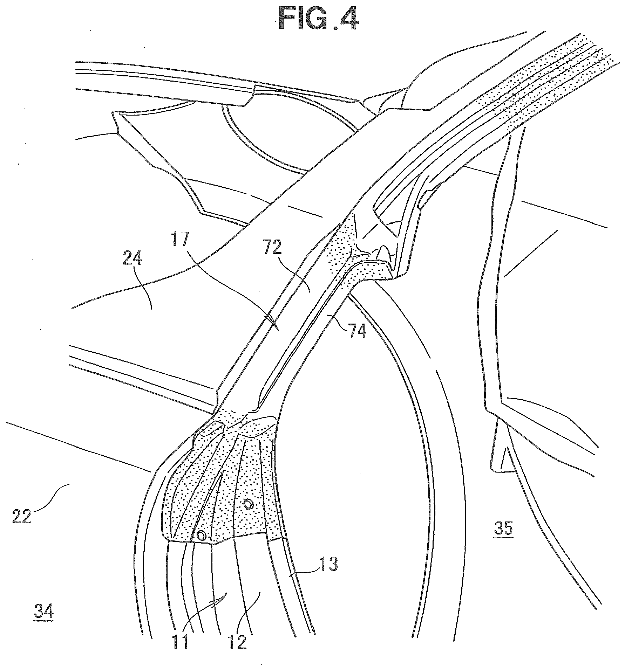

As shown in Figs. 3 and 4, the opening 13 of the vehicle body side part 11 is formed at the door opening member 12 while a roof opening 14 is formed upwardly of the door opening 13.

The rear weather strip 17 is mounted to a rear part 13a of the door opening 13 and a rear part 14a of the roof opening 14. The front weather strip 18 is mounted to a front part 13b of the door opening 13 and a front part 14b of the roof opening 14.

The door opening member 12 is comprised of the rear cabin body 21 forming a lower half of the rear part 13a of the door opening 13, the rear pillar part 23 forming an upper half of the rear part 13a of the door opening 13, the front cabin body 25 forming a lower half of the front part 13b of the door opening 13, and the front pillar part 27 forming an upper half of the front part 13b of the door opening 13.

The rear part 13a of the door opening 13 is formed jointly by the upper and lower halves of the rear part 13a of the door opening 13. Similarly, the front part 13b of the door opening 13 is formed jointly by the lower and upper halves of the front part 13b of the door opening 13.

The rear part 13a and the front part 13b of the door opening 13 are constructed similarly each other. Thus, description will be made below as to only the rear part 13a of the door opening 13 and description as to the front part 13b of the door opening 13 will be omitted. Note also that the rear part 14a and the front part 14b of the roof opening 14 are constructed similarly. Thus, discussion will be made below as to only the rear part 14a of the roof opening 14 and discussion as to the front part 14b of the roof opening 14 will be omitted.

Note also that the rear cabin body 21 and the front cabin body 25 are constructed similarly to each other. Thus, discussion will be made below as to only the rear cabin body 21 and discussion as to the front cabin body 25 will be omitted. Additionally note that the rear pillar part 23 and the front pillar part 27 are constructed similarly to each other. Thus, description will be made as to only the rear pillar part 23 and description as to the front pillar part 27 will be omitted.

The rear fender panel 22 is connected to a vehicle-exterior side of the rear cabin body 21 and hence is exposed to a vehicle exterior 34. The rear pillar part 23 projects upward from the rear cabin body 21. A rear external member 24 is connected to a vehicle-exterior side of the rear pillar part 23 and hence is exposed to the vehicle exterior 34.

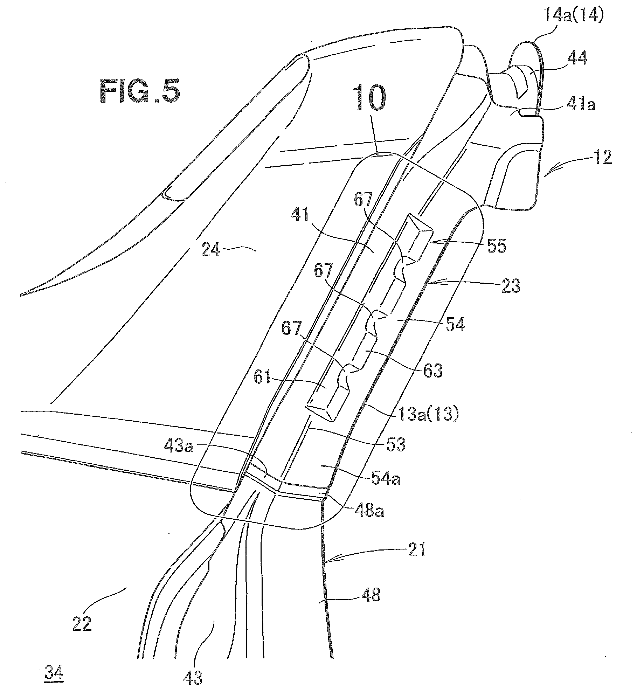

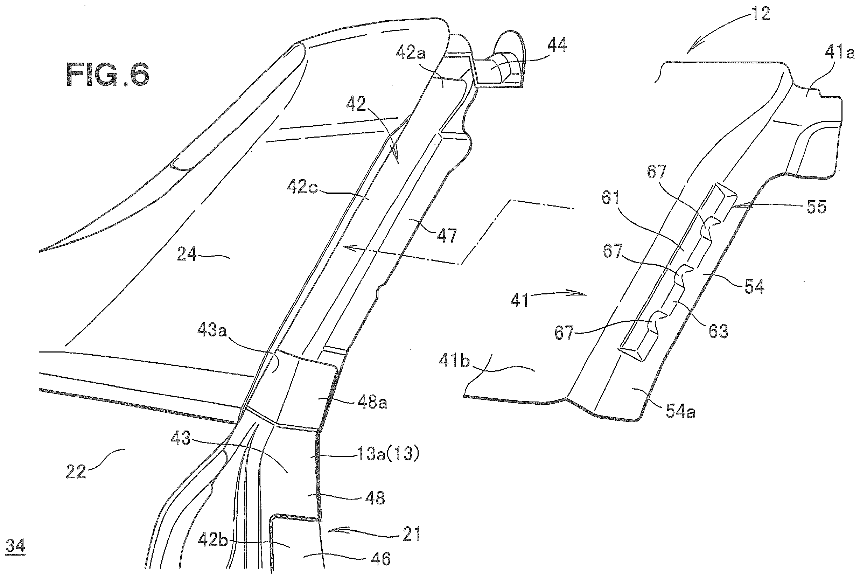

As shown in Figs. 5 and 6, the door opening member 12 has an upper outer panel 41 forming the rear part 13a of the door opening 13, an inner panel 42 and a lower outer panel 43. The rear part 14a of the roof opening 14 is provided upwardly of the rear part 13a of the door opening 13 while the rear part 14a of the roof opening 14 is formed by a rear roof rail 44. An upper end part 41a of the upper outer panel 41 and an upper end part 42a of the inner panel 42 are joined with the rear roof rail 44.

The inner panel 42 is positioned on a vehicle-interior side, facing a vehicle interior 35, of the rear fender panel 22 and the rear external member 24 (Fig. 4). More specifically, a lower half 42b of the inner panel 42 is positioned on a vehicle-interior side of the rear fender panel 22 while an upper half 42c of the inner panel 42 is positioned on a vehicle-interior side of the rear external member 24.

The lower outer panel 43 is positioned on a vehicle-exterior side of the lower half 42b of the inner panel, that is, between the lower half 42b of the inner panel 42 and the rear fender panel 22 (see Fig. 6). A flange 46 of the lower half 42b of the inner panel 42 and a flange 48 of the lower outer panel 43 are laid one over the other in a vehicle width direction and joined together by a hemming process. The flanges 46, 48 subjected to the hemming process are additionally joined together by spot welding.

The upper outer panel 41 is positioned on a vehicle-exterior side of the upper half 42c of the inner panel 42, that is, between the upper half 42c of the inner panel 42 and the rear external member 24. Note also that the lower part 41b of the upper outer panel 41 is positioned closer to the vehicle exterior 34 than the upper part 43a of the lower outer panel 43. The outer panel lower part 41b forms a lower part of the upper outer panel 41 in such a manner as to avoid a bulging part 55 (discussed later). Namely, the outer panel lower part 41b forms a region or part where the bulging part 55 is not provided.

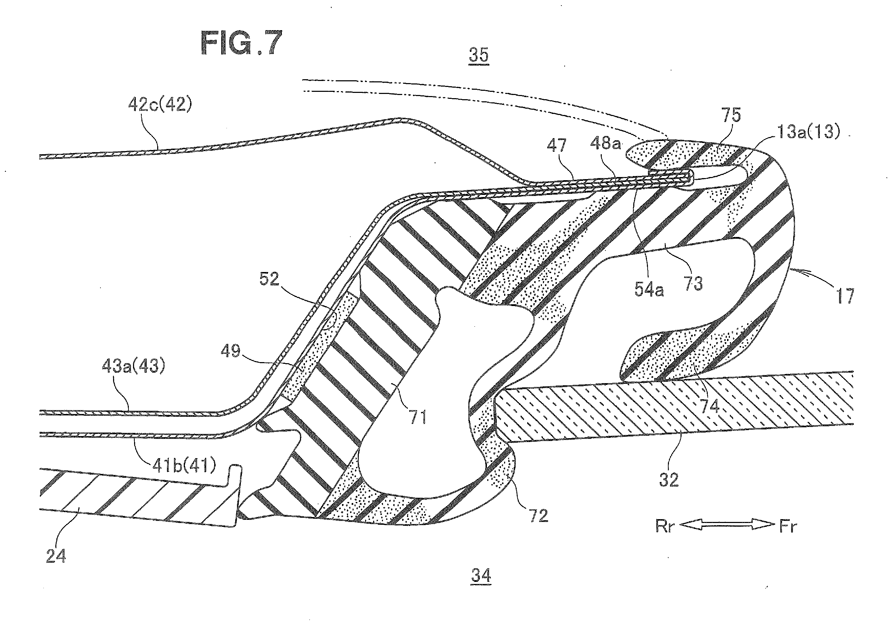

As shown in Fig. 7, a flange 47 of the upper half 42c of the inner panel 42, a flange 54a of outer panel lower part 41 and a flange 48a of the outer panel upper part 43a are laid one over the other in the vehicle width direction and joined together by a hemming process. The thus-hemmed flanges 47, 54a, 48a are further joined together by spot welding.

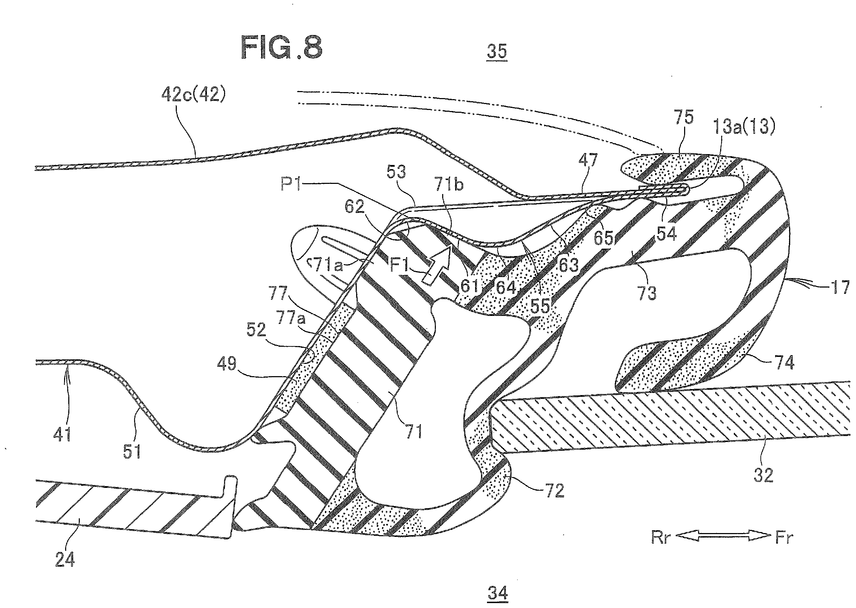

Referring now to Fig. 8, the upper outer panel 41 is positioned laterally outwardly of the upper half 42c of the inner panel 42 in opposed relation to the vehicle exterior 34. The rear weather strip 17 is adhered to an adhesion surface 52 of the upper outer panel 41, via a double-sided adhesive tape 49, by application in the vehicle-width direction from the vehicle exterior 34. The rear weather strip 17 is attached to the upper outer panel 41 in this manner.

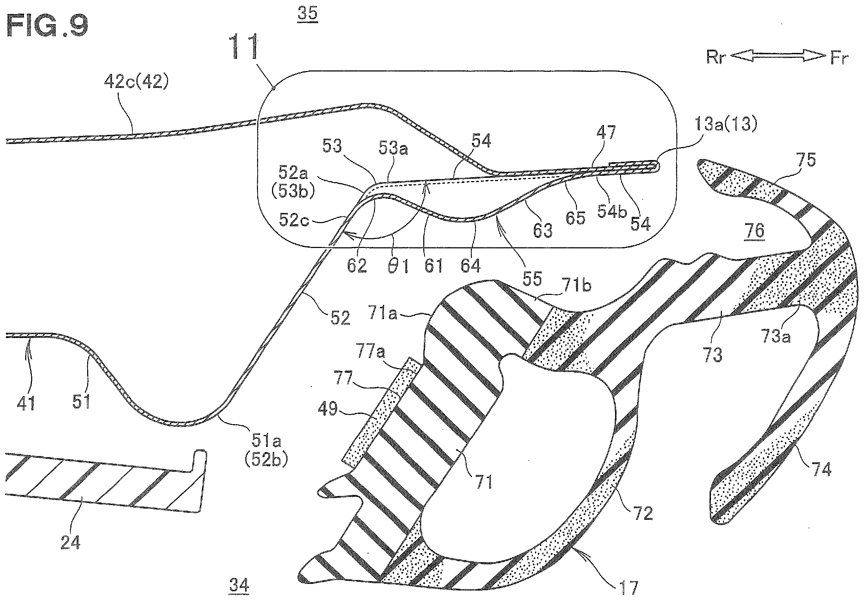

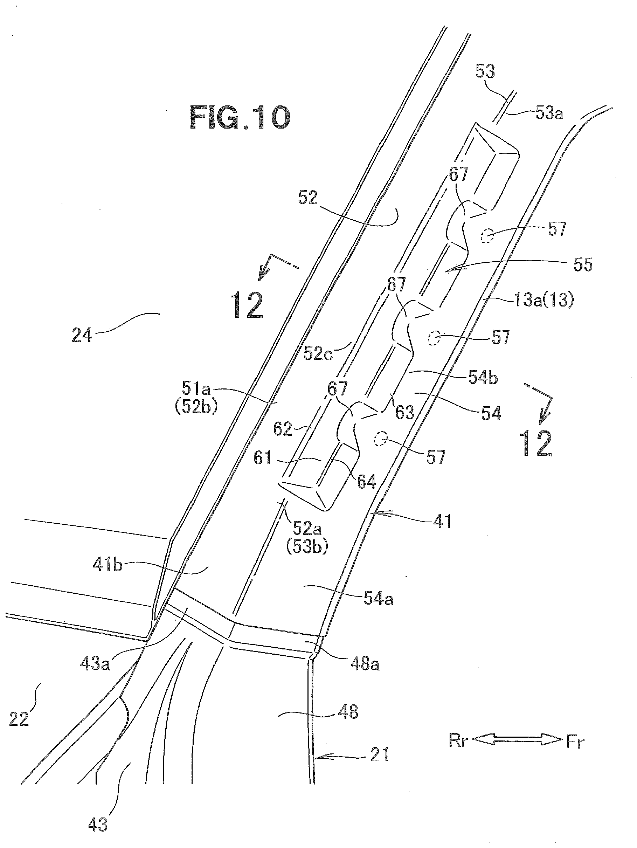

As shown in Figs. 9 and 10, the upper outer panel 41 includes a panel body 51 provided inward of the rear external member 24 in the vehicle-width direction, the adhesion surface 52 continuing with a front end part 51a of the panel body 51, a corner part 53 continuing from the front end part 51a of the adhesion surface 52, a flange 54 continuing from a front end part 53a of the corner part 53, and the bulging part 55 extending from the adhesion surface 52 and over the flange 54.

The flange 54 of the upper outer panel 41 projects or bulges from the front end part 53a of the corner part 53 frontward of the vehicle body and has a plurality of welds 57. The flange 54 (but for the flange 54a of the outer panel lower part 41b) of the upper outer panel 41 is laid on the flange 47 of the upper part 42c of the inner panel 42 in the vehicle-width direction. With the flange 54 of the upper outer panel 41 and the flange 47 of the upper half 42c of the inner panel 42 laid one over the other, the flanges 54, 47 are joined together by a hemming process.

With the flange 54 of the upper outer panel 41 and the flange 47 of the upper half 42c of the inner panel 42 hem-joined together, the flanges 54, 47 are further spot-welded together at a plurality of welds 57. In this state, the upper half 42c of the inner panel 42 is positioned closer to the vehicle interior 35 than the upper outer panel 41. The upper half of the rear part 13a of the door opening 13 is formed by front edges of the flanges 54, 47.

A front end part 52a of the adhesion surface 52 is connected to a rear end part 53b of the corner part 53. The adhesion surface 52 is disposed to project, at its portion extending from the rear end part 53b of the corner part 53 rearward of the vehicle body, in an inclined fashion in the vehicle-width direction toward the vehicle exterior 34. Thus, the adhesion surface 52 is inclined at an angle of inclination θ1 relative to the flange 54. The thus-inclined adhesion surface 52 is positioned farther away from the rear part 13a of the door opening 13 toward rearward of the vehicle body than the flange 54 and on the side opposed to the vehicle exterior 34 in the vehicle-width direction. A rear end part 52b of the adhesion surface 52 is connected to a front end part 51a of the panel body 51.

The adhesion surface 52 is thus supported by the panel body 51 and the corner part 53. In this state, the adhesion surface 52 is retained such that it projects from the rear end part 53b of the corner part 53 in an inclined fashion. A base 71 of the rear weather strip 17 is adhered to an outer surface of the retained adhesion surface 52, via a double-sided adhesive tape 49, from the vehicle exterior side in the vehicle-width direction.

The corner part 53 is formed at a position between the adhesion surface 52 and the flange 54, where the adhesion surface 52 and the flange 54 intersect. Stated otherwise, the adhesion surface 52 becomes continuous with the flange 54 via the corner part 53. The corner part 53 is formed in a ridge line form so as to project toward the vehicle interior 35. Thus, the corner part 53 is formed to have a U-shape opened toward the vehicle exterior 34.

The bulging part 55 is formed to extend astride a front end part vicinity 52c of the adhesion surface 52 and a vehicle-body-length-direction center 54b of the flange 54. The bulging part 55 is draw-formed such that it stands astride the adhesion surface 52 and the flange 54 and bulges from the flange 54 toward the vehicle exterior 34. Thus, the corner part 53 between the adhesion surface 52 and the flange 54 is reinforced by the bulging part 55, whereby deformation of the corner part 53 is prevented. This prevents the angle θ1 between the adhesion surface 52 and the flange 54 from becoming larger to spread them wider and from becoming smaller to narrow a space between them, whereby deformation of the adhesion surface 52 and the flange 54 is prevented. The bulging part 55 has a projecting surface 61, a first connecting surface 62, a second connecting surface 63, a ridge line surface 64 and a third connecting surface 65.

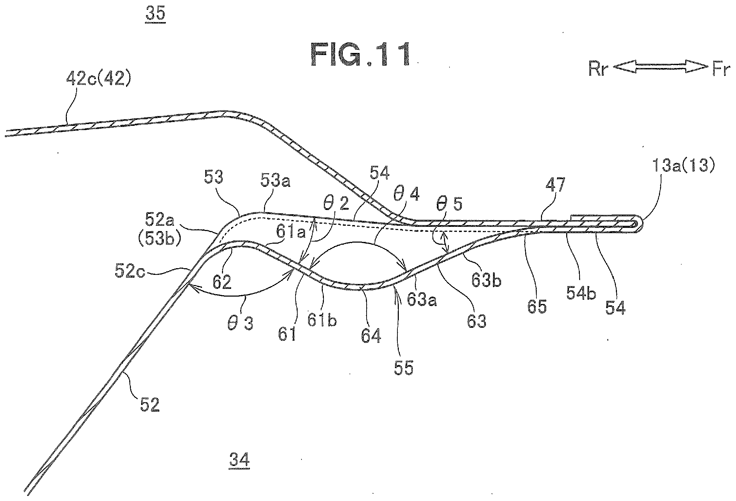

As shown in Fig. 11, the projecting surface 61 is connected at the rear end part 61a to the front end part vicinity 52c of the adhesion surface 52 through the first connecting surface 62. The front end part vicinity 52c of the adhesion surface 52 is positioned farther toward the vehicle rearward than the front end part 52a of the adhesion surface 52. The first connecting surface 62 is positioned closer to the vehicle exterior 34 than the front end part 52a of the adhesion surface 52, the corner part 53 and the flange 54 and is formed in a curved fashion so as to have a U-shape opening toward the vehicle exterior 34.

At a portion between the adhesion surface 52 and the flange 54, the projecting surface 61 is caused to project in an inclined fashion from the adhesion surface 52 toward the vehicle exterior 34 and toward forward of the vehicle body at an angle of inclination θ2. As a result, the projecting surface 61 is positioned at an inclination angle θ3 relative to the adhesion surface 52 so as to be substantially perpendicular to the latter. The projecting surface 61 is formed integrally with the draw-formed bulging part 55.

Front end part 61b of the projecting surface 61 is connected to the vehicle-body-length-direction center 54b of the flange 54 through the ridge line surface 64, the second connecting surface 63 and the third connecting surface 65. A front end part 63b of the second connecting surface 63 is connected to the vehicle-body-length direction center 54b of the flange 54 through the third connecting surface 65. The second connecting surface 63 projects in an inclined fashion from the ridge line surface 64 toward the vehicle interior 35 and forwardly of the vehicle body. Thus, the second connecting surface 63 is disposed at an inclination angle θ4 relative to the projecting surface 61 so as to be substantially perpendicular to the latter.

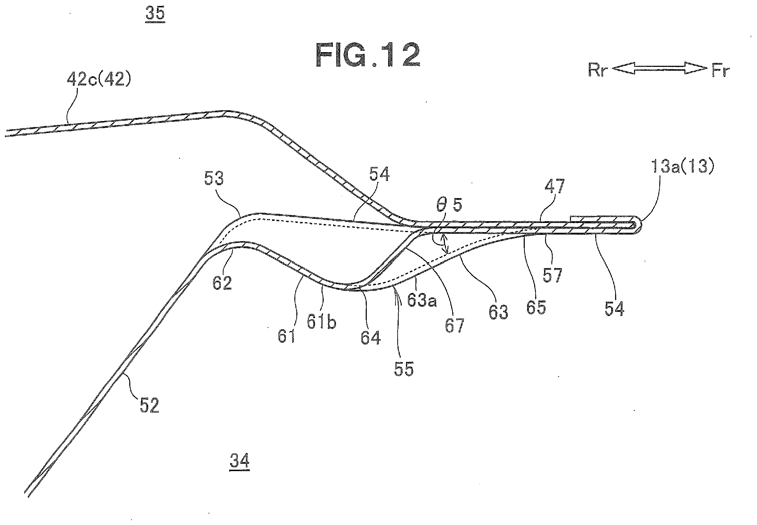

As shown in Figs. 10 and 12, the second connecting surface 63 is disposed to have an inclination angle θ5 relative to the flange 54 and has a plurality of recessed parts 67. In the vicinity of weld points 57, the recessed parts 67 are formed to be depressed toward the adhesion surface 52.

The ridge line surface 64 is formed in a curved fashion so as to bulge toward the vehicle exterior 34 farther than a front end part 61b of the projecting surface 61 and a rear end part 63a of the second connecting surface 63. Thus, that part of the bulging part 55 which projects most toward the vehicle exterior 34 is formed by the ridge line surface 64.

The third connecting surface 65 is formed in a curved fashion so as to be concave or depressed toward the vehicle exterior 34.

As shown in Figs. 8 and 11, the bulging part 55 is formed in an inclined fashion such that the projecting surface 61 is inclined at an inclination angle θ2 relative to the flange 54 whilst the second connecting surface 63 is inclined at an inclination angle θ5 relative to the flange 54. The second connecting surface 63 is angled at an inclination angle θ4 relative to the projecting surface 61 so as to be substantially perpendicular to the latter. The first connecting surface 62 is disposed farther outward in the vehicle-width direction toward the vehicle exterior 34 than the front end part 52a of the adhesion surface 52, the corner part 53 and the flange 54.

Consequently, the bulging part 55 bulges toward the vehicle exterior 34 in the vehicle-width direction farther than the front end part 52a of the adhesion surface 52, the corner part 53 and the flange 54 and is formed into a generally triangular shape. As a result, the bulging part 55 is imparted with rigidity against a pressing force F1 applied from the base 71 of the rear weather strip 17 to the projecting surface 61.

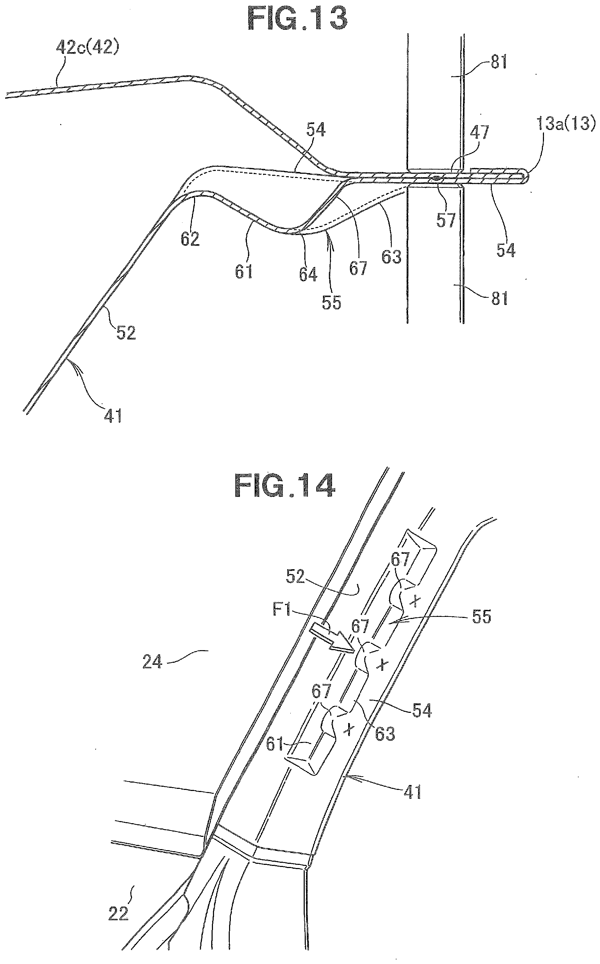

Next, discussion will be made, with reference to Fig. 13, as to an example mode of spot-weld-connecting the flange 54 of the upper outer panel 41 and the flange 47 of the upper half 42c of the inner panel 42.

As shown in Fig. 13, the flange 54 (excluding the flange 54a (see Fig. 10)) of the upper outer panel 41 and the flange 47 of an upper half 42c of the inner panel 42 are joined together by a hemming process followed by spot-welding them together as at weld 57.

The recessed parts 67 are provided to the second connecting surfaces 63 in the vicinity of the weld points 57 thereon. Upon spot-welding each flange 54, 47 at the weld points 57, a spot-welding tool (spotting gun) 81 is allowed to be engaged in the recessed parts 67. As a result, the spotting gun 81 is prevented from interfering the second connecting surface 63 to thereby ensure a smooth spot-welding operation.

Referring to Fig. 14, discussion will be made next as to an example mode of bearing a pressing force F1 that acts on the projecting surface 61.

As shown in Fig. 14, the second connecting surface 63 has the plurality of recessed parts 67 provided at a predetermined interval, thereby forming the second connecting surface 63 into a concave-convex or uneven shape. As a result, the second connecting surface 63 is imparted with rigidity against the pressing force F1 acted from the rear weather strip 17 (see Fig. 8) to the projecting surface 61. Namely, the projecting surface 61 can be supported with increased rigidity. With this arrangement, the pressing force F1 inputted into the projecting surface 61 from the rear weather strip 17 can be suitably borne by the second connecting surface 63.

Turning back to Fig. 8, the projecting surface 61 of the bulging part 55 is provided on the side of the adhesion surface 52 while the second connecting surface 63 and the third connecting surface 65 on the opposite side from the projecting surface 61 are provided on the side of the flange 54. Thus, when the base 71 of the rear weather strip 17 is pressed against the projecting surface 61 and adhered to the adhesion surface 52 by means of the double-sided adhesive tape 49, the pressing force F1 acted from the base 71 onto the projecting surface 61 can be borne by the flange 54. As a result, the projecting surface 61 can be prevented from tilting toward flange 54, whereby the base 71 and hence the rear weather strip 17 can be securely positioned at a mounting position P1 by the projecting surface 61.

The projecting surface 61 is connected to the flange 54 through the ridge line surface 64, the second connecting surface 63 and the third connecting surface 65 such that the second connecting surface 63 is positioned substantially perpendicularly to the projecting surface 61. That is, the second connecting surface 63 can be caused to extend in the same direction as the pressing force F1.

Herein, the pressing force F1 should be construed as a force that arises from pressing the rear weather strip 17 against the projecting surface 61.

Causing the second connecting surface 63 to extend in the same direction as the pressing force F1 makes it possible to efficiently transmit the pressing force F1 to the flange 54 through the second connecting surface 63. This further makes it possible to suitably bear the pressing force F1 with the flange 54 and to securely prevent tilting of the projecting surface 61.

Provision of the projecting surface 61 between the adhesion surface 52 and the flange 54 enables the projecting surface 61 to be provided separately from the flange 54. As a result, the projecting surface 61 can be formed such that the rear weather strip 17 can be positioned without being influenced by the shape or profile of the flange 54. With this arrangement, it becomes possible to position the rear weather strip 17 at the mounting position P1 with the projecting surface 61 even when vehicle designing and formability of the rear part 13a of the door opening 13 requires the angle of the flange 54 relative to the adhesion surface 52 to be obtuse.

Turning back to Figs. 6 and 7, the lower outer panel 43 has the outer panel upper part or half 43a positioned between an outer panel lower part 41b and the upper half 42c of the inner panel 42. The flange 48a of the outer panel upper part 43a is disposed between a flange 54a of the outer panel lower part 41b and the flange 47 of the upper half 42c of the inner panel 42. The flanges 48a, 54a, 47 are placed in an overlapping relation to each other in the vehicle-width direction.

In the above state, the flanges 48a, 54a, 47 are joined together in a hemming process. This is followed by spot-welding the hemmed flanges 48a, 54a, 47 together. Front edges of these flanges 48a, 54a, 47 form the rear part 13a of the door opening 13.

The flange 54a of the outer panel lower part 41b is positioned below and at a part of the outer panel devoid of the bulging part 55. Thus, the flange 54a is considered to have reduced rigidity compared to the flange 54 where the bulging part 55 is provided.

To this end, the flange 48a of the outer panel upper part 43a and the flange 47 of the upper half 42c of the inner panel 42 are laid on the flange 54a of the outer panel lower part 41b from the vehicle-width direction. As a result, the flange 54a of the outer panel lower part 41b is reinforced by the two flanges 48a, 47 and is imparted with increased rigidity. Consequently, deformation of the flange 54a of the outer panel lower part 41b can be prevented with the two flanges 48a, 47.

As shown in Fig. 5, the rear pillar part 23 projects upward from the upper end part of the rear cabin body 21. Since the rear pillar part 23 thus projects upward from the upper end part of the rear cabin body 21, the rear pillar part 23 is considered to have reduced rigidity compared to the rear cabin body 21.

To this end, an outer surface of the upper outer panel 41 is formed by the rear pillar part 23 and is provided with the bulging part 55.

The bulging part 55 is provided in such a manner as to astride the adhesion surface 52 and the flange 54. Thus, the corner part 53 between the adhesion surface 52 and the flange 54 is reinforced by the bulging part 55, whereby the upper outer panel 41 is increased in rigidity. Consequently, the rear pillar part 23 is reinforced by the upper outer panel 41 with increased rigidity. It also becomes possible for the rear external member 24 provided to the rear pillar part 23 to be suitably supported at the rear pillar part 23.

On the other hand, the rear cabin body 21 is formed to have increased rigidity compared to the rear pillar part 23. The external surface of the rear cabin body 21 is formed by the lower outer panel 43 to which the rear fender panel 22 is connected from the vehicle exterior 34. Thus, the rear fender panel 22 can be suitably supported by the rear cabin body 21 increased in rigidity

Turning back to Figs. 8 and 9, the rear weather strip 17 is comprised of the base 71 for being adhered to the adhesion surface 52 by means of the double-sided adhesive tape 49, a hollow sealing part 72 for being connected to the base 71, an extension part 73 projecting from the sealing part 72, an outer lip 74 projecting from an end part 73a of the extension part 73 toward the vehicle exterior 34, and an inner lip 75 projecting from the end part 73a of the extension part 73 toward the vehicle interior 35.

The base 71 is formed from a solid rubber and has a substantially rectangular cross-section. The hollow sealing part 72, the extension part 73, the outer lip 74 and the inner lip 75 are formed from a sponge rubber (foamed rubber) integrally with the base 71. The base 71 includes a bottom 71a with a groove 77 of U-shape. The double-sided adhesive tape 49 is adhered to the bottom 77a of the groove 77 and is accommodated in the groove 77.

With the double-sided adhesive tape 49 adhered to the adhesion surface 52, an inner surface 71b of the base 71 is held in contact with the projecting surface 61. As a result, the rear weather strip 17 is positioned at and mounted to the mounting position P1.

Namely, the rear weather strip 17 can be positioned at an adhesion point by pressing the inner surface 71b of the base 71 against the projecting surface 61 upon adhering the rear weather strip 17 to the adhesion surface 52 from the vehicle exterior 34 in the vehicle-width direction. This makes it possible to attach the rear weather strip 17 to the adhesion point (namely, the mounting position P1) without expending extra man hours.

In positioning the weather strip while restricting, with the flange, the extension part of the weather strip as in the conventional arrangement, it is necessary to integrally form the bottom part of the weather strip, the extension part and the lip part from a solid rubber. This makes it difficult to maintain desired flexibility in the conventional weather strip, thus leaving a tedious and time-consuming operation to assemble the weather strip to the door opening.

In contrast, the rear weather strip 17 is formed such that it can be positioned with the inner surface 71b of the base 71, held in contact with the projecting surface 61. Thus, it is not necessary for the extension 73 of the rear weather strip 17 to be formed from a solid rubber but from a sponge rubber. Namely, the extension part 73 of the rear weather strip 17 is formed from a sponge rubber. The hollow sealing part 72, the outer lip 74 and the inner lip 75 are also formed from a sponge rubber.

It thus becomes possible to obtain desired flexibility of the rear weather strip 17 and to make the rear weather strip 17 readily deform in conformity with the rear part 13a of the door opening 13. As a result, it becomes possible to assemble the rear weather strip 17 to the adhesion surface 52 (and hence the rear part 13a of the door opening 13) without expending extra work hours.

For mounting the rear weather strip 17 to the mounting position P1, a metal retainer is normally provided as a separate member to the door opening 13 and the rear weather strip 17 is mounted to the retainer. In contrast, in the vehicle body structure 10 according to the embodiment described above, it is possible to adhere the rear weather strip 17 to the mounting position P1 of the door opening 13 by pressing the inner surface 71b of the base 71 against the projecting surface 61. As a result, the retainer which is normally required for weather strip mounting can be omitted, whereby weight reduction and costs reduction in relation to the vehicle body structure being described becomes possible.

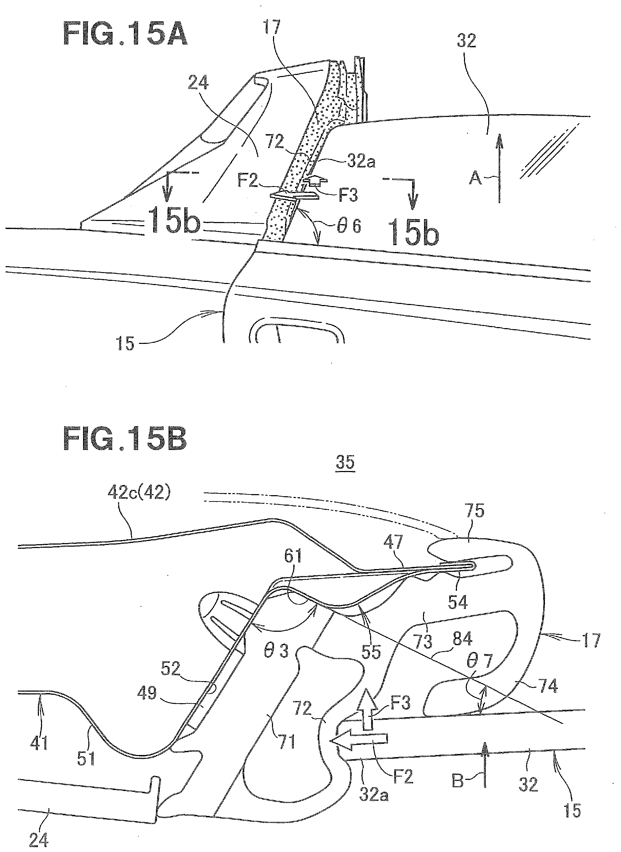

Next, with reference to Figs. 15A and 15B, description will be made as to an example mode of inhibiting displacement of the rear weather strip 17 by the window glass pane 32 of the sashless door 15 as the window glass pane 32 is elevated.

As shown in Fig. 15A, the rear weather strip 17 is disposed in opposed relation to a rear edge part 32a of the window glass pane 32 so as to form an inclination angle θ6 relative to the window glass pane 32. Thus, movement of the window glass pane 32 in the direction of arrow A causes the rear edge part 32a of the window glass pane 32 to press the sealing part 72 of the rear weather strip 17 backwardly of the vehicle body. At this time, pressing force F2 is applied from the rear edge part 32a of the window glass pane 32 to the sealing part 72.

As the window glass pane 32 is elevated in the direction of arrow A, the window glass pane 32 moves in the direction of arrow B (see Fig. 15B) toward the vehicle interior 35. Thus, the rear edge part 32a of the window glass pane 32 presses the sealing part 72 of the rear weather strip 17 toward the vehicle interior 35. As a result, a pressing force F3 is applied from the rear edge part 32a of the window glass pane 32 to the sealing part 72.

As shown in Fig. 15B, the projecting surface 61 is formed at an inclination angle θ3 relative to the adhesion surface 52 so as to be substantially perpendicular to the latter. Extension line 84 of the projecting surface 61 is maintained at an inclination angle θ7 relative to the window glass pane 32. That is, the projecting surface 61 and the adhesion surface 52 are formed to be substantially perpendicular to each other and formed in V-shape opening toward the window glass pane 32.

Thus, as the pressing forces F2 and F3 are applied from the rear edge part 32a of the window glass pane 32 to the sealing part 72, it becomes possible to prevent, with the projecting surface 61 and the adhesion surface 52, displacement of the rear weather strip 17 in the direction of application of the force F2 and F3. As a result, it becomes possible to achieve a required sealing property between the rear weather strip 17 and the window glass pane 32.

Next, description will be made as to an example mode of inhibiting displacement of the rear weather strip 17 by the window glass pane 32 upon closure of the sashless door 15.

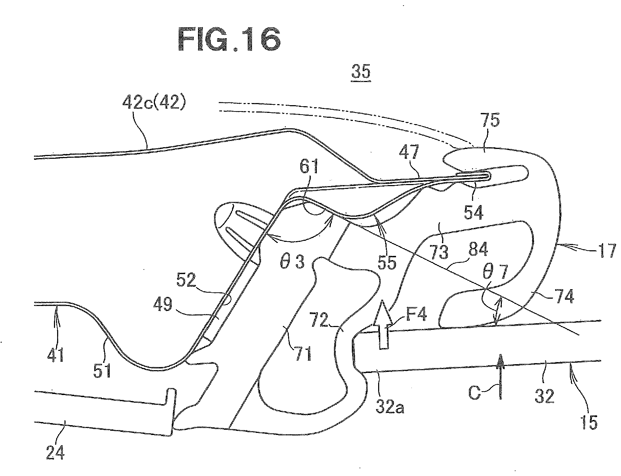

As shown in Fig. 16, when the sashless door 15 is closed with the window glass pane 31 elevated, the window glass pane 32 moves in the direction of arrow C, whereupon the rear edge part 32a of the window glass pane 32 presses the sealing part 72 of the rear weather strip 17 toward the vehicle interior 35. As a result, pressing force F4 is applied from the rear edge part 32a of the window glass pane 32 to the sealing part 72.

Even when the pressing force F4 is applied to the sealing part 72, the rear weather strip 17 is prevented from being displaced in the direction of application of the pressing force F4 by the projecting surface 61 and the adhesion surface 52, as in the case of the window glass pane 32 being elevated (see Figs. 15A and 15B). Consequently, a desired sealing effect is achieved between the rear weather strip 17 and the window glass pane 32.

The weather-strip-equipped vehicle body structure according to the present invention should not be construed as being limited to the above described embodiment as it can be modified and improved within the scope of the appended claims. For example, although it has been described as being applied to the sashless door 15 in the aforementioned embodiment, the invention may also be applied to a sash-equipped door. Even when the flange 54 is disposed at an obtuse angle relative to the adhesion surface 52 so as to meet the design requirements on the vehicle and foldability of the sash, the rear weather strip 17 can be positioned by the projecting surface 61.

In the embodiment described above, the bulging part 55 has been described as being draw-formed so as to form the projecting surface 61 integrally therewith. Alternatively, the projecting surface 61 may be formed by other modes such as cutting it out from the flange 54 and causing it to erect.

In the thus-far explained embodiment, the rear weather strip 17 has been described as being attached to the adhesion surface 52 by means of the double-sided adhesive tape 49. Alternatively, the rear weather strip 17 may be attached to the adhesion surface 52 by other means such as an adhesive agent.

In the embodiment described above, the extension part 73 of the rear weather strip 17 has been described as being formed from a sponge rubber. Alternatively, the extension part 73 may be formed from a solid rubber. In the rear weather strip 17, a space 76 defined between the extension part 73 and the inner lip 75 is set to be far larger than the total thickness of the joined flanges 47, 54, as can be seen from Fig. 9. Thus, even when the extension part 73 and so forth are formed from a solid rubber, the rear weather strip 17 can be mounted without requiring a tedious and time-consuming operation.

Further, the configurations and constructions of the vehicle body structure, the vehicle body side part, the door opening member, the door opening, the sashless door, the front and rear weather strips, the front and rear cabin bodies, the front and rear fender panels, the front and rear pillar parts, the upper outer panel, the outer panel lower part, the inner panel, the lower outer panel, the flange of the lower outer panel, the adhesion surface, the corner part, the flange of the outer panel, the bulging part, the projecting surface, the second connecting surface and the recessed parts should not be construed as being limited to those described in the embodiment described above as their alterations are possible within the scope of the appended claims. The present invention is particularly suitable for use on an automobile including a weather-strip-equipped vehicle body structure in which a weather strip is employed to seal between a door and a door opening.
A weather-strip-equipped vehicle body structure (10) includes a door opening member (12) having an upper outer panel (41) and an inner panel (42). The upper outer panel (41) includes a flange (54) joined to the inner panel (42) to form a door opening (13) and an adhesion surface (52) to which a rear weather strip (17) is adhered. The upper outer panel (41) also has a projecting surface (61) located between the adhesion surface (52) and the flange (54) and projecting substantially perpendicularly to the adhesion surface (52).

## Claims

1. A weather-strip-equipped vehicle body structure comprising:
a door opening member (12) forming a door opening (13) of a vehicle body;
a door (15) for opening and closing the door opening (13); and
a weather strip (17) for sealing between the door opening (13) and the door (15) when the door (15) is closed, wherein
the door opening member (12) includes:
an outer panel (41) positioned on a side facing a vehicle exterior (34);
an inner panel (42) positioned closer to a vehicle interior (35) than the outer panel (41),
the outer panel (41) includes:
a flange (54) joined to the inner panel (42) for forming the door opening (13); and
an adhesion surface (52), for which the weather strip (17) is positioned at an adhering position of the outer panel (41), positioned farther away from the door opening (13) than the flange (54) and proximately to the vehicle exterior (34) for allowing adhesion of the weather strip (17) thereto, and
the outer panel (41) has, between the adhesion surface (52) and the flange (54), a projecting surface (61) projecting substantially perpendicularly to the adhesion surface (52),
**characterized in that**
an extension line (84) of the projecting surface (61) is maintained at an acute angle (θ7) relative to a window glass pane (32), and the adhesion surface (52) is inclined at an obtuse angle of inclination (θ1) relative to the flange (54),
whereby the weatherstrip (17) is pressed against the projecting surface (61) when positioning the weatherstrip at the adhering position.

2. The weather-strip-equipped vehicle body structure according to claim 1, **characterized by** further comprising a corner part (53) which is provided between the adhesion surface (52) and the flange (54) and where the adhesion surface (52) and the flange (54) intersect, such that the adhesion surface (52) and the flange (54) extend continuously, wherein the outer panel (41) includes a bulging part (55) disposed to astride the adhesion surface (52) and the flange (54) and bulging farther toward the vehicle exterior (34) than the corner part (53), and the projecting surface (61) is provided to the bulging part.

3. The weather-strip-equipped vehicle body structure according to claim 2, **characterized in that** the bulging part (55) has a connecting surface (63) for connecting the projecting surface (61) to the flange (54), and the connecting surface (63) is disposed substantially perpendicularly to the projecting surface (61).

4. The weather-strip-equipped vehicle body structure according to claim 3, **characterized in that** the flange (54) has a weld point (57) at which the flange (54) is connected by spot welding to the inner panel (42), and the connecting surface (63) has, in a vicinity of the weld point (57), a recessed part (67) depressed toward the adhesion surface (52).

5. The weather-strip-equipped vehicle body structure according to any one of claims 2 - 4, **characterized in that** the door opening member (12) includes a second outer panel (43) which is positioned between the outer panel (41) and the inner panel (42) and has a second flange (48a) laid on the flange (54) of the outer panel (41) in a vehicle-width direction, and the flange (54) and the second flange (48a) are laid one over the other at an outer panel part devoid of the bulging part (55).

6. The weather-strip-equipped vehicle body structure according to any one of claims 2 - 5, **characterized in that** the door opening member (12) comprises: a cabin body (21) connected to a fender panel (22) positioned on a side facing the vehicle exterior (34); and a pillar part (23) projecting downward from the cabin body (21), and the outer panel (41) is included in the pillar part (23).

## Patentansprüche

1. Mit einem Dichtungsstreifen ausgestattete Fahrzeugkarosseriestruktur, welche aufweist:
ein Türöffnungselement (12), das eine Türöffnung (13) einer Fahrzeugkarosserie bildet;
eine Tür (15) zum Öffnen und Schließen der Türöffnung (13); und
ein Dichtungsstreifen (17) zur Abdichtung zwischen der Türöffnung (13) und der Tür (15), wenn die Tür (15) geschlossen ist, wobei
das Türöffnungselement (12) enthält:
eine Außenplatte (41), die an einer zur Fahrzeugaußenseite (34) weisenden Seite angeordnet ist;
eine Innenplatte (42), die näher am Fahrzeuginneren (35) als die Außenplatte (41) angeordnet ist,
wobei die Außenplatte (41) enthält:
einen Flansch (54), der mit der Innenplatte (42) verbunden ist, um die Türöffnung (13) zu bilden; und
eine Klebeoberfläche (52), die für den Dichtungsstreifen (17) an einer Klebeposition der Außenplatte (41) weiter von der Türöffnung (13) entfernt angeordnet als der Flansch (54) und nahe der Fahrzeugaußenseite (34) angeordnet ist, um das Ankleben des Dichtungsstreifens (17) daran zu erlauben, und
die Außenplatte (41) zwischen der Klebeoberfläche (52) und dem Flansch (54) eine vorstehende Oberfläche (61) aufweist, die im Wesentlichen senkrecht zur Klebeoberfläche (52) vorsteht,
**dadurch gekennzeichnet, dass** eine Verlängerungslinie (84) der vorstehenden Oberfläche (61) in einem spitzen Winkel (θ7) relativ zu einer Fensterglasscheibe (32) gehalten wird, und die Klebeoberfläche (52) mit einem stumpfen Neigungswinkel (θ1) relativ zu dem Flansch (54) geneigt ist,
wodurch der Dichtungsstreifen (17) gegen die vorstehende Fläche (61) gedrückt wird, wenn die Dichtung an der Klebeposition positioniert ist.

2. Die mit einem Dichtungsstreifen ausgestattete Fahrzeugkarosseriestruktur nach Anspruch 1, die ferner **dadurch gekennzeichnet ist, dass** sie ein Eckteil (53) aufweist, das zwischen der Klebeoberfläche (52) und dem Flansch (54) vorgesehen ist, und wo die Klebeoberfläche (52) und der Flansch (54) einander schneiden, so dass die Klebeoberfläche (52) und der Flansch (54) sich durchgehend erstrecken, wobei die Außenplatte (41) ein Wölbungsteil (55) enthält, das über die Klebeoberfläche (52) und dem Flansch (54) hinweg angeordnet ist und weiter zur Fahrzeugaußenseite (34) hin gewölbt ist als das Eckteil (53), und die vorstehende Oberfläche (61) an dem Wölbungsteil vorgesehen ist.

3. Die mit einem Dichtungsstreifen ausgestattete Fahrzeugkarosseriestruktur nach Anspruch 2, **dadurch gekennzeichnet, dass** das Wölbungsteil (55) eine Verbindungsoberfläche (63) zum Verbinden der vorstehenden Oberfläche (61) mit dem Flansch (54) aufweist, und die Verbindungsoberfläche (63) im Wesentlichen senkrecht zur vorstehenden Oberfläche (61) angeordnet ist.

4. Die mit einem Dichtungsstreifen ausgestattete Fahrzeugkarosseriestruktur nach Anspruch 3, **dadurch gekennzeichnet, dass** der Flansch (54) einen Schweißpunkt (57) aufweist, an dem der Flansch (54) durch Punktschweißen mit der Innenplatte (42) verbunden ist, und die Verbindungsoberfläche (63) in der Nähe des Schweißpunktes (57) ein Vertiefungsteil (67) aufweist, das zu der Klebeoberfläche (52) hin vertieft ist.

5. Die mit einem Dichtungsstreifen ausgestattete Fahrzeugkarosseriestruktur nach einem der Ansprüche 2 - 4, **dadurch gekennzeichnet, dass** das Türöffnungselement (12) eine zweite Außenplatte (43) enthält, die zwischen der Außenplatte (41) und der Innenplatte (42) angeordnet ist und einen zweiten Flansch (48a) aufweist, der auf dem Flansch (54) der Außenplatte (41) in Fahrzeugbreitenrichtung aufliegt, und der Flansch (54) und der zweite Flansch (48a) an einem Außenplattenteil ohne das Wölbungsteil (55) übereinanderliegen.

6. Die mit einem Dichtungsstreifen ausgestattete Fahrzeugkarosseriestruktur nach einem der Ansprüche 2 - 5, **dadurch gekennzeichnet, dass** das Türöffnungselement (12) aufweist: einen Kabinenkörper (21), der mit einem Kotflügel (22) verbunden ist, der an einer zur Fahrzeugaußenseite (34) weisenden Seite angeordnet ist; und ein Säulenteil (23), das von dem Kabinenkörper (23) nach unten vorsteht, und die Außenplatte (41) in dem Säulenteil (23) enthalten ist.

## Revendications

1. Structure de carrosserie de véhicule équipée d'un caoutchouc d'étanchéité comprenant :
un élément d'ouverture de porte (12) formant une ouverture de porte (13) d'une carrosserie de véhicule ;
une porte (15) pour ouvrir et fermer l'ouverture de porte (13) ; et
un caoutchouc d'étanchéité (17) pour réaliser l'étanchéité entre l'ouverture de porte (13) et la porte (15) lorsque la porte (15) est fermée, dans laquelle :
l'élément d'ouverture de porte (12) comprend :
un panneau externe (41) positionné sur un côté faisant face à un extérieur du véhicule (34) ;
un panneau interne (42) positionné plus à proximité d'un intérieur du véhicule (35) que le panneau externe (41),
le panneau externe (41) comprend :
une bride (54) assemblée au panneau interne (42) pour former l'ouverture de porte (13) ; et
une surface d'adhérence (52) pour laquelle le caoutchouc d'étanchéité (17) est positionné dans une position d'adhérence du panneau externe (41), positionné plus à distance de l'ouverture de porte (13) que la bride (54) et à proximité de l'extérieur du véhicule (34) pour permettre l'adhérence du caoutchouc d'étanchéité (17), et
le panneau externe (41) a, entre la surface d'adhérence (52) et la bride (54), une surface en saillie (61) faisant saillie de manière sensiblement perpendiculaire à la surface d'adhérence (52), **caractérisée en ce que** :
une ligne d'extension (84) de la surface en saillie (61) est maintenue à un angle aigu (θ7) par rapport à une vitre de fenêtre (32), et la surface d'adhérence (52) est inclinée à un angle d'inclinaison obtus (θ1) par rapport à la bride (54),
moyennant quoi le caoutchouc d'étanchéité (17) est comprimé contre la surface en saillie (61) lorsque l'on positionne le caoutchouc d'étanchéité dans la position d'adhérence.

2. Structure de carrosserie de véhicule équipée avec un caoutchouc d'étanchéité selon la revendication 1, **caractérisée en ce qu'**elle comprend en outre une partie de coin (53) qui est prévue entre la surface d'adhérence (52) et la bride (54) et où la surface d'adhérence (52) et la bride (54) se coupent, de sorte que la surface d'adhérence (52) et la bride (54) s'étendent de manière continue, dans laquelle le panneau externe (41) comprend une partie de renflement (55) disposée à cheval sur la surface d'adhérence (52) et la bride (54) et se renflant davantage vers l'extérieur du véhicule (34) que la partie de coin (53) et la surface en saillie (61) est prévue sur la partie de renflement.

3. Structure de carrosserie de véhicule équipée avec un caoutchouc d'étanchéité selon la revendication 2, **caractérisée en ce que** la partie de renflement (55) a une surface de raccordement (63) pour raccorder la surface en saillie (61) à la bride (54) et la surface de raccordement (63) est disposée de manière sensiblement perpendiculaire à la surface en saillie (61) .

4. Structure de carrosserie de véhicule équipée avec un caoutchouc d'étanchéité selon la revendication 3, **caractérisée en ce que** la bride (54) a un point de soudure (57) auquel la bride (54) est raccordée par soudage par points au panneau interne (42), et la surface de raccordement (63) a, à proximité du point de soudure (57), une partie évidée (67) enfoncée vers la surface d'adhérence (52).

5. Structure de carrosserie de véhicule équipée avec un caoutchouc d'étanchéité selon l'une quelconque des revendications 2 à 4, **caractérisée en ce que** l'élément d'ouverture de porte (12) comprend un second panneau externe (43) qui est positionné entre le panneau externe (41) et le panneau interne (42) et a une seconde bride (48a) posée sur la bride (54) du panneau externe (41) dans le sens de la largeur du véhicule, et la bride (54) et la seconde bride (48a) sont posées l'une sur l'autre au niveau de la partie de panneau externe dépourvue de partie de renflement (55).

6. Structure de carrosserie de véhicule équipée avec un caoutchouc d'étanchéité selon l'une quelconque des revendications 2 à 5, **caractérisée en ce que** l'élément d'ouverture de porte (12) comprend : un corps de cabine (21) raccordé à un panneau d'aile (22) positionné sur un côté faisant face à l'extérieur du véhicule (34) ; et une partie de pilier (23) faisant saillie vers le bas à partir de la carrosserie de cabine (21), et le panneau externe (41) est compris dans la partie de pilier (23).
